# EUROPÄISCHE PATENTANMELDUNG

(11) **EP 1 258 962 A2**
(43) Veröffentlichungstag der Anmeldung: **20.11.2002**
(21) Anmeldenummer: 02007895.2
(22) Anmeldetag: 09.04.2002
(51) Int. Cl.: H02G 3/04

(54) **Kabelkanal**

(30) Priorität: 16.05.2001 DE 20108261 U
(71) Anmelder: Tehalit GmbH & Co. KG, 67716 Heltersberg (DE)
(72) Erfinder: Kany, Jean-Michel, 57910 Hambach (FR); Schnurr, Richard, 66957 Vinningen (DE)
(74) Vertreter: Patentanwälte Möll und Bitterich

(57) **Zusammenfassung**

Die Unterteile von Leitungsführungskanälen werden üblicherweise mit metallischen Befestigungselementen (2), beispielsweise Schrauben, an einer Unterlage befestigt. Um die auf der Kanalinnenseite blank liegenden Köpfe der Befestigungselemente (2) zu isolieren, wird eine elastische Isolierplatte oder -leiste (20) über die Befestigungselemente (2) gespannt und in Haltenuten (13) in den Seitenwänden (11) des Kanalunterteils verankert.

## Beschreibung

Die Erfindung betrifft Leitungsführungskanäle gemäß dem Oberbegriff des Anspruchs 1.

Die Unterteile von Leitungsführungskanälen aller Art werden in vielen Fällen mit Nägeln oder Schrauben an Wänden, Regalen, Konsolen usw. befestigt. Dabei werden die Befestigungsteile durch den Boden geschlagen oder durch werksseitig angebrachte Bodenlochungen hindurchgeführt. Die Köpfe liegen dann auf der Kanalinnenseite blank. Dies ist in vielen Fällen unerwünscht.

Es wurden daher bereits Lösungen entwickelt, die ein solches Blankliegen vermeiden. Eine erste derartige Lösung ist aus der DE-U 91 03 649 bekannt. Hier werden zur Befestigung der Kanalunterteile zunächst U-förmige Halterungen an die Wand geschraubt, auf die die Kanalunterteile aufgerastet werden. Die Kanalböden bleiben ungelocht.

Eine andere Lösung zeigt die US 5 089 667 A. Diese Lösung setzt voraus, dass die Kanalunterteile bodenseitig innen eine Vielzahl von parallelen Halteleisten aufweisen. Auf diese Halteleisten werden flächige Abdeckelemente aufgerastet, die die Köpfe der Befestigungsschrauben abdecken. Die Abdeckelemente können ihrerseits Halteleisten und Trennwände tragen.

An dieser Lösung ist nachteilig, dass sie nur bei Leitungsführungskanälen anwendbar ist, die geeignete Halteleisten besitzen.

Der vorliegenden Erfindung liegt die Aufgabe zugrunde, die Isolierung der Befestigungsteile von Kanalunterteilen weiter zu vereinfachen.

Diese Aufgabe wird gelöst durch einen Leitungsführungskanal mit den Merkmalen des Anspruchs 1.

Dank der Verwendung einer elastischen, flachen Isolierplatte oder -leiste, die die Köpfe der Befestigungsteile überspannt, ist die Isolierung bei Bedarf einfach und schnell anzubringen. Eine besondere Form wie beim Stand der Technik ist nicht erforderlich. Diese einfachen Isolierplatten oder -leisten sind besonders preiswert.

Gemäß einer Weiterbildung der Erfindung sind an den Seitenwänden der Kanalunterteile innen mit Abstand zum Boden Halteleisten angeformt. Dadurch entstehen zwischen dem Kanalboden und den Halteleisten Haltenuten zur Befestigung der Isolierplatten.

Gemäß einer Ausgestaltung der Erfindung kann an der Isolierplatte- oder -leiste auch eine Kanaltrennwand angeformt sein.

Anhand der Zeichnung soll die Erfindung in Form von Ausführungsbeispielen näher erläutert werden. Es zeigen
- Fig. 1: einen Querschnitt durch einen ersten Leitungsführungskanal,
- Fig. 2: einen Querschnitt durch einen zweiten Leitungsführungskanal und
- Fig. 3: eine Schrägansicht des Leitungsführungskanals der Fig. 2.

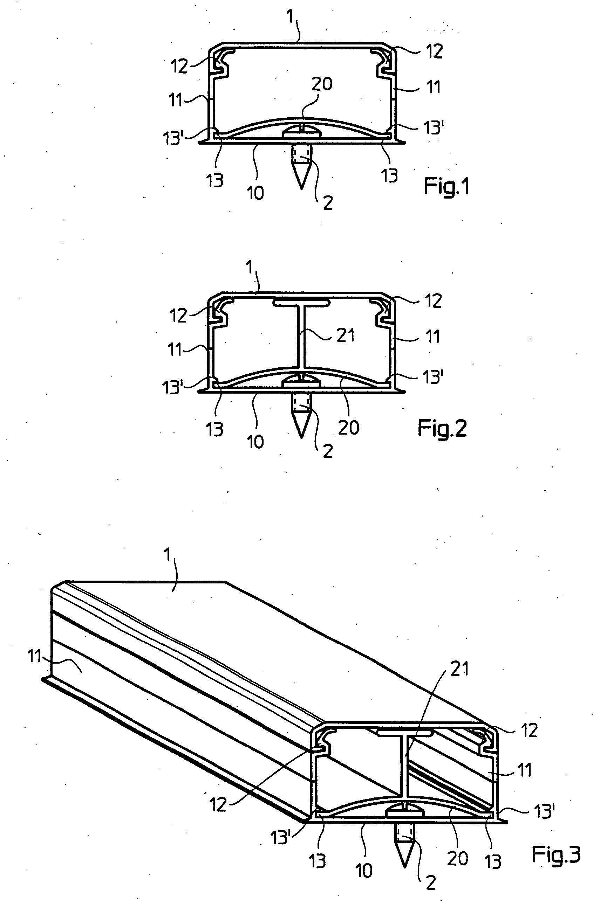

Fig. 1 zeigt einen Querschnitt durch einen Leitungsführungskanal. Man erkennt ein Kanalunterteil mit Boden 10, Seitenwänden 11 und je einem Deckelhalteprofil 12 an den Seitenwänden. Auf die Deckelhalteprofile 12 ist ein Kanaloberteil 1 aufgerastet.

Der Boden 10 ist beispielsweise werksseitig gelocht, so dass Befestigungsteile, z. B. Schrauben 2, hindurchgesteckt werden können. Deren Kopf liegt auf der Kanalinnenseite frei.

Zur Isolierung der Befestigungsteile 2 ist eine elastische Isolierplatte 20 vorgesehen. Diese ist in Nuten 13 in den Seitenwänden 11 eingespannt. Diese Nuten 13 sind gebildet durch Halteleisten 13', die mit Abstand zum Boden 10 an den Seitenwänden 11 angeformt sind. In der Praxis lässt sich die Isolierplatte 20 auch ohne Halteleisten 13' befestigen.

Die Isolierplatte 20 ist preiswert und bei Bedarf schnell montiert und ebenso schnell wieder abgenommen.

Fig. 2 zeigt einen Querschnitt durch einen Leitungsführungskanal mit montierter Isolierplatte 20, die zusätzlich eine Trennwand 21 besitzt, die das Innere des Kanals in zwei gegeneinander isolierte Kammern unterteilt.

Fig. 3 zeigt eine Schrägansicht des Kabelkanals der Fig. 2. Dank der Isolierung der Befestigungsteile 2 durch die Isolierplatte 20 können nicht nur voll isolierte Leitungen sondern auch einfach isolierte Drähte verwendet werden, wobei die einschlägigen Vorschriften über die Isolierung eingehalten werden.

## Patentansprüche

1. Leitungsführungskanal, im wesentlichen umfassend ein Unterteil mit
- einem Boden (10) für Befestigungsteile (2), gegebenenfalls werksseitig vorgelocht,
- zwei Seitenwänden (11)
- und Deckelhalteprofilen (12) an den Seitenwänden (11),
**gekennzeichnet durch** die Merkmale:
- an den Seitenwänden (11) innen sind Haltenuten (13) ausgebildet,
- eine elastische Isolierplatte oder -leiste (20) ist über die Befestigungsteile (2) gespannt und in den Haltenuten (13) verankert.

2. Leitungsführungskanal nach Anspruch 1, **gekennzeichnet durch** das Merkmal:
- an den Seitenwänden (11) innen sind mit Abstand zum Boden (10) Halteleisten (13') angeformt.

3. Leitungsführungskanal nach Anspruch 1 oder 2, **gekennzeichnet durch** das Merkmal:
- an der Isolierplatte oder -leiste (20) ist eine Kanaltrennwand (21) angeformt.
